# EUROPEAN PATENT SPECIFICATION

(11) **EP 3 170 254 B1**
(45) Date of publication and mention of the grant of the patent: **29.08.2018**
(21) Application number: 15738458.7
(22) Date of filing: 13.07.2015
(51) Int. Cl.: H02P 25/08

(54) **AN ELECTRIC SUPERCHARGER AND METHOD RELATING THERETO**
ELEKTRISCHER VORVERDICHTER UND ZUGEHÖRIGES VERFAHREN
UN COMPRESSEUR DE SURALIMENTATION ÉLECTRIQUE ET PROCÉDÉ ASSOCIÉ À CELUI-CI

(30) Priority: 18.07.2014 GB 201412815
(43) Date of publication of application: 24.05.2017
(73) Proprietor: Valeo Air Management UK Limited, Redditch, Worcestershire B98 0DZ (GB)
(72) Inventor: WEBSTER, Matthew, Basildon Essex SS14 3WN (GB)
(74) Representative: Abel & Imray
(86) International application number: PCT/GB2015/052019
(87) International publication number: WO 2016/009186

(56) References cited:
- EP-A1- 0 564 268
- WO-A1-98/05115
- DE-A1- 19 639 698
- BLAABJERG, F ET AL.: "digital implemented random modulation strategies for ac and switched reluctance drives", INDUSTRIAL ELECTRONICS, CONTROL , AND INSTRUMENTATION, PROCEEDINGS OF THE IECON 1993, 1 January 1993 (1993-01-01), pages 676-682, XP002745486, DOI: 10.1109/IECON.1993.338999

## Description

The present invention relates to electric superchargers, in particular electric superchargers including switched reluctance motors.

### BACKGROUND

A switched reluctance motor has a plurality of stator poles and a plurality of rotor poles. One set of poles (usually the stator poles) are coils that are energized using a plurality of electrical phases. The other set of poles (usually the rotor poles) are usually formed from permanent magnets. Successive pairs of the coils are energized in turn, causing the rotor to rotate.

In an electric supercharger (eSC) switched reluctance motor, energizing of the coils is typically controlled by a controller. As the rotor rotates, a rotor position transducer (RPT) provides a magnetic waveform from which the speed and position of each of the rotor poles are calculated. The energizing of each pair of coils is carried out as the rotor reaches particular angles in its rotation. For each pair of coils, at an ON angle, current is supplied to the coils. At a Freewheel (FW) angle, supply of current is stopped, but the current already in the coils is allowed to circulate through the coil via a diode. At an OFF angle, the circulating current is switched to ground, turning off the coil. Sets of ON, FW and OFF switching angles are provided for different motor speeds and different motor torques in an ON, FW and OFF look-up table, respectively. Where there is modulation of the current pulse width, a fourth look-up table provides pulse width modulation level (PWM) for different motor speeds and different motor torques.

The controller converts the three angles (ON, FW, OFF) from the look-up table into times, dependent on the speed of the rotor, and effects the ON, FW and OFF current change events at those times. The PWM level is applied between the ON and FW. Those PWM and event (ON, FW, OFF) timings are based on the one before last falling edge seen by the RPT Rotor Position Transducer falling edge.

A problem with known eSC switched-reluctance systems is that they suffer from effects, including noise and harshness, which are undesirable for consumers.

The publication entitled "Digital implemented random modulation strategies for ac and switched reluctance drives" by BLAABJERG, F ET AL. for INDUSTRIAL ELECTRONICS, CONTROL , AND INSTRUMENTATION PROCEEDINGS OF THE IECON 1993, 1 January 1993 (1993-01-01), pages 676-682, discloses the use of random modulated PWM strategies for switched reluctance machines. This document lists three methods that can be used for the reduction of the acoustic noise in SRMs by modulation techniques.

WO 98/05115 discloses a control circuit used to optimise noise reduction in a motor.

DE 19639698 discloses a system which energises a switched reluctance motor. The OFF angle is advanced in reverse proportion to a speed and a target torque of a rotor. The advance prevents the generation of noises.

### SUMMARY OF THE INVENTION

An aspect of the invention provides a method of operating a switched-reluctance motor in an electric supercharger according to claim 1. A method according to an example comprises controlling a supply of current in a plurality of phases to respective pluralities of coils on a stator or rotor of the motor. The step of controlling comprises controlling a supply of current in a first phase to a first plurality of coils on the stator or rotor of the motor, and controlling a supply of current in a second phase to a second plurality of coils on the stator or rotor. For each phase, the control comprises repeatedly (i) starting supply of the current to the plurality of coils supplied by the current of that phase, (ii) stopping the supply of current to those coils but allowing current already supplied to circulate in those coils and (iii) eliminating the circulating current from those coils. The timings of the starting, stopping and eliminating steps of the first phase are provided from a first source. The method comprises obtaining the timing of at least one of the starting, stopping and eliminating steps in the second phase from a second source, such that the timing of the at least one step is different to the timing of the corresponding step in the first phase.

The inventor has discovered that the periodic nature of the ON, FW and OFF signals in prior-art motors causes periodic unwanted force waveforms within the motor, i.e. periodic unwanted electromagnetic attractions between the rotor and stator; for example the radial component of the torque produced by the motor can cause the stator to periodically compress and expand radially. Those unwanted electromagnetic attractions cause the components of the motor to vibrate, resulting in undesirable noise and harshness. The inventor has measured in the vibration spectrum frequencies characteristic of that behaviour. The problem becomes worse at higher speed, because high speeds result in greater load.

The present invention recognises that rather than each phase referring to the same look-up table and therefore potentially having the same timings, it is beneficial to introduce a difference in the timings of at least one of the ON, FW and/or OFF steps for at least two phases in the motor. This is thought to break at least some of the periodicity of the ON, FW and OFF signals; the periodicity of the unwanted force waveforms may therefore also be broken, which reduces unwanted vibrations.

The inventor has measured the noise spectrum of a car supercharger and believes that the radial compression and expansion caused by the radial component of the torque can occur at frequencies having harmonics that coincide with resonant frequencies of the stator. In one example, the 4^{th} and 8^{th} harmonics of the rotor speed were found to cause noise problems. Advantageously, example embodiments of the present invention can disrupt the periodicity of such compressions and expansions and thereby reduce the noise.

The method comprises obtaining the timing of at least one of the starting, stopping and eliminating steps in the second phase from a second source. The second source is different to the first source. The second source may be independent of the first source. However, it is within the scope of the invention that the second source be related to the first source; the second source may contain data that has been derived in some way, from the first source. For example, in some embodiments of the invention, the step of obtaining the timing of the at least one step in the second phase, may include selecting randomly a difference from the timing from the corresponding step in the first phase.

The randomly selected difference may be determined by a random number generator deliberately biased to avoid selecting a difference that would result in the same timing as the first phase, rather than a different timing.

The timing of the at least one step in the second phase may be constrained within upper and lower thresholds. In embodiments comprising the step of selecting randomly the difference in the timing, that step may comprise interpolating, by a randomly selected amount, between the upper and lower thresholds. For example, the timings of at least one of the starting, stopping and eliminating steps of a phase can be obtained according to an interpolation between different values provided in two look-up tables, with the interpolation being taken at a randomly selected position between the different values. It may be that the first of the look-up tables contains timings that are earlier than the corresponding timings of the first source, and the second of the look-up tables contains timings that are later than the corresponding timings of the first source, so that the interpolation can result in a randomly selected timing for the step for the second phase that is earlier or later than the corresponding step for the first phase.

The first source preferably comprises a look-up table. The look-up table preferably provides timings for each of the steps for the first phase (for example as a function of rotor speed and desired torque). A look-up table may contain measurements of time, rotor angles, or any other data that can be used by the controller to implement the timings. The word "timings" is used herein to mean any of those alternatives.

The skilled person will understand that two or more look-up tables can be provided as separate look-up tables or as separate portions of one larger look-up table, and references herein to a "look-up table" should be construed to cover both of those possibilities.

The second source may be a second look-up table. The second look-up table may have been calibrated empirically to contain timings that seek to optimise the noise reduction. In some embodiments, the second look-up table may, in effect, be temporarily created (for example in volatile memory) to obtain the timing of the at least one step in the second phase.

The at least one step of the second phase may be the starting step. The at least one step of the second phase may be the stopping step; the inventor believes that this arrangement is particularly effective in reducing the noise. The at least one step of the second phase may be the eliminating step.

The magnitude of the difference between the timing of the at least one step in the second phase and the corresponding step in the first phase, may vary with time.

The difference in the timing may be chosen so that torque applied by the motor is constant.

The current can be supplied in pulses and the pulses of one of the first, second and third phases can be different from each other. For example, the pulses may be different in their width (i.e. in the duration of each pulse). The width of the pulses may be stored in one or more look-up tables. Each phase can be associated with its own look-up table that provides the pulse width(s) or pulse width modulation rate(s) for that phase. The look-up tables can be calibrated independently and empirically, for example to minimise unwanted noise.

The present invention is applicable to switched reluctance motors (SRMs) of 2 phases and to SRMs of more than 2 phases (for example SRMs having three, or more than three phases). Thus the skilled person will readily understand that in some embodiments of the invention, the method may include, supplying current in only two phases, whereas in other embodiments of the invention, the method may include supplying current in 3, or more than 3, phases (all those embodiments still having first and second phases).

In embodiments comprising 3 or more phases, the method may comprise the step of controlling a supply of current in a third phase to a third plurality of coils on the stator or rotor of the motor. The starting, stopping and eliminating steps for the third phase are preferably delayed relative to the corresponding steps for the second phase. The timing of said at least one step in the second phase is preferably different to the timing of the corresponding step in the third phase. The timings of the starting, stopping and eliminating steps of the third phase may be provided in the first source.

According to another aspect of the invention, there is provided an electric supercharger including a switched reluctance motor according to claim 10. In an example an electric supercharger including a switched reluctance motor comprises
- a stator and a rotor;
- a supply providing current in a plurality of phases to respective pluralities of coils on the stator or rotor of the motor;
- a controller for controlling supply of current from the supply in a first phase to a first plurality of coils on the stator or rotor, and in a second phase to a second plurality of coils on the stator or rotor, and
- a memory module containing a first source of timings.

For each phase, the controller repeatedly (i) starts supply of the current to the plurality of coils supplied by the current of that phase, (ii) stops the supply of current to those coils but allows current already supplied to circulate in those coils and (iii) eliminates the circulating current from those coils; and wherein the timings of the starting, stopping and eliminating steps of the first phase are provided in a first source. The controller is arranged to obtain the timing of at least one of the starting, stopping and eliminating steps in the second phase from a second source, such that the timing of the at least one step in the second phase is different to the timing of the corresponding step in the first phase.

The stator may have a plurality of poles, for example 6. The rotor has a plurality of poles, for example 4. It may be for example that the number of poles on the stator is two more than the number of poles on the rotor.

According to another example there is provided a method of calibrating a switched-reluctance motor in an electric supercharger, the method comprising the steps of: (a) controlling a supply of current in a plurality of phases to respective pluralities of coils on a stator or rotor of the motor, including controlling a supply of current in a first phase to a first plurality of coils on the stator or rotor of the motor, and controlling a supply of current in a second phase to a second plurality of coils on the stator or rotor; wherein, for each phase, the control comprises repeatedly (i) starting supply of the current to the plurality of coils supplied by the current of that phase, (ii) stopping the supply of current to those coils but allowing current already supplied to circulate in those coils and (iii) eliminating the circulating current from those coils; wherein the timings of the starting, stopping and eliminating steps of the first phase are provided in a first look-up table; and wherein the starting, stopping and eliminating steps for the second phase are delayed relative to the corresponding steps for the first phase; characterised by the steps of (b) adjusting the timing of at least one of the starting, stopping and eliminating steps in the second phase such that the timing of the at least one step is different to the timing of the corresponding step in the first phase; and (c) iteratively repeating step (b) to determine a timing suitable for reducing periodic unwanted waveforms within the motor. Steps (a) to (c) may be repeated for a plurality of different motor speeds and a plurality of different loads.

According to another example, there is provided a method of creating a look-up table for a switched-reluctance motor of an electric supercharger, the method comprising the steps of: calibrating the motor according to the method described herein to obtain the timings suitable for reducing periodic unwanted waveforms within the motor; and populating a look-up table with the timings of the at least one step of the second phase, for a plurality of combinations of different motor speed and load.

According to yet another example there is provided a method of operating a switched-reluctance motor in an electric supercharger, the method comprising controlling a supply of current in a first phase to a first plurality of coils on a stator or rotor of the motor, controlling a supply of current in a second phase to a second plurality of coils on the stator or rotor, and controlling a supply of current in a third phase to a third plurality of coils on the stator or rotor; wherein, for each phase, the control comprises repeatedly (i) starting supply of the current to the plurality of coils supplied by the current of that phase, (ii) stopping the supply of current to those coils but allowing current already supplied to circulate in those coils and (iii) eliminating the circulating current from those coils; wherein the starting, stopping and eliminating steps for the third phase are delayed relative to the corresponding steps for the second phase, and the starting, stopping and eliminating steps for the second phase are delayed relative to the corresponding steps for the first phase; characterised in that the delay between at least one of the starting, stopping and eliminating steps for the first phase and the corresponding step for the second phase is different from the delay between that step for the second phase and the corresponding step for the third phase.

According to yet another example there is provided an electric supercharger including a switched-reluctance motor, the motor comprising:
- a stator and a rotor;
- a supply providing current in a plurality of phases;
- a controller for controlling supply of current from the supply
   o in a first phase to a first plurality of coils on the stator or rotor,
   o in a second phase to a second plurality of coils on the stator or rotor, and
   o in a third phase to a third plurality of coils on the stator or rotor;
wherein, for each phase, the controller repeatedly (i) starts supply of the current to the plurality of coils supplied by the current of that phase, (ii) stops the supply of current to those coils but allows current already supplied to circulate in those coils and (iii) eliminates the circulating current from those coils; and wherein the controller delays the starting, stopping and eliminating steps for the third phase relative to the corresponding steps for the second phase, and the starting, stopping and eliminating steps for the second phase relative to the corresponding steps for the first phase; characterised in that the delay between at least one of the starting, stopping and eliminating steps for the first phase and the corresponding step for the second phase is different from the delay between that step for the second phase and the corresponding step for the third phase.
It will of course be appreciated that features described in relation to embodiments of one aspect of the present invention may be incorporated into other aspects of the present invention. For example, the method of the invention may incorporate any of the features described with reference to the electric supercharger of the invention and vice versa.

### BRIEF DESCRIPTION OF THE DRAWINGS

Examples of the invention will now be described with reference to the accompanying drawings, of which:
FIGURES 1-4 show consecutive stages of rotation of the rotor, or phases, in the operation of a known switched reluctance motor at operational speeds,
FIGURE 5 is a block circuit diagram of a control circuit for the motor of Figures 1 to 4,
FIGURE 6 is a diagram indicating steps in an example embodiment according to the invention;
FIGURE 7 is a schematic plot of current timings (a) in a prior-art motor and (b) in a motor that is used another example embodiment of the present invention; and
FIGURE 8 shows three alternative configurations of look-up tables for use in an example embodiment of the invention.

### DETAILED DESCRIPTION

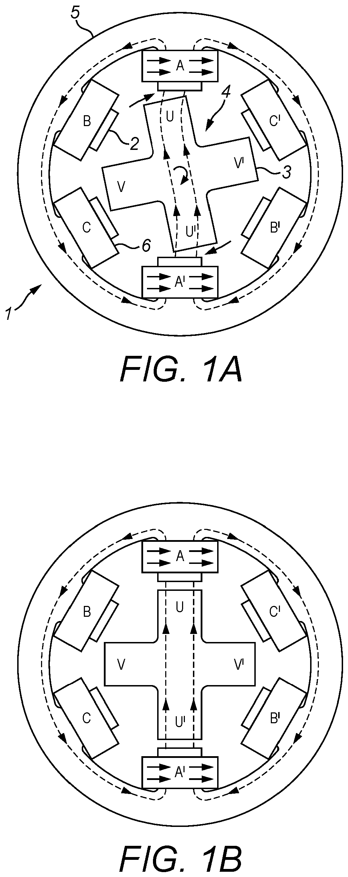

A typical switched reluctance motor is shown in Figures 1A, 1B and 2 to 4. This example has a combination (which is frequent) of six, preferably evenly, spaced poles 2 on the stator 1 and four, preferably evenly, spaced poles 3 on the rotor 4. In this example, the poles of the stator project inwardly from a stator ring 5, the ring providing a path of low reluctance material between the stator poles.

The rotor is formed of a stack of cross-shaped laminations, also of low reluctance material. Therefore each rotor pole is connected to the diametrically opposite rotor pole by a low reluctance path, for reasons which will become apparent. So, as marked, pole U is connected by a low reluctance path to pole U' and pole V to pole V'.

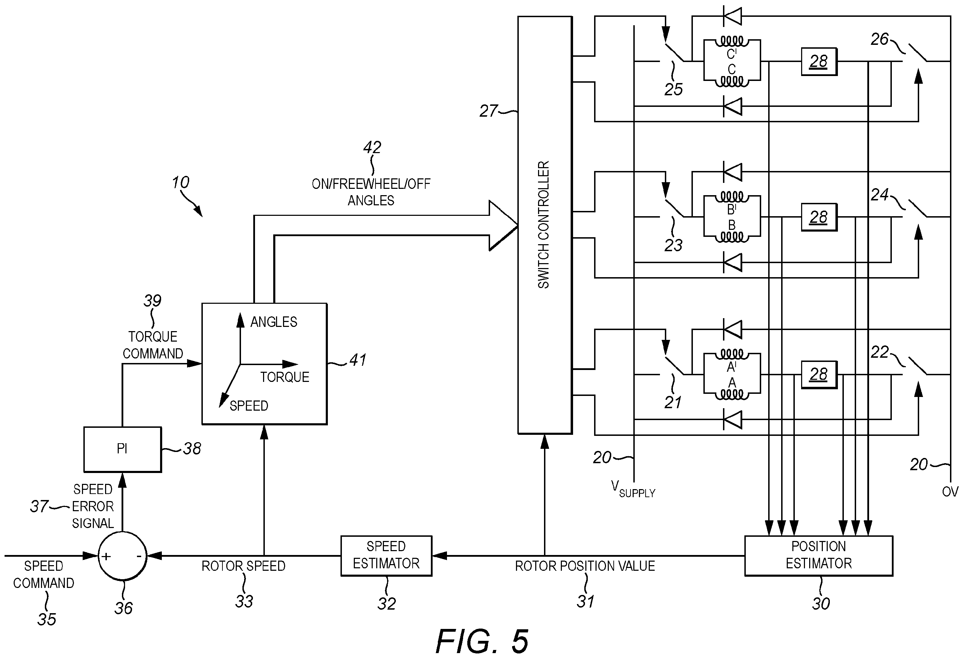

Each pole of the stator is wound with a coil 6 and the coils are arranged in pairs, each pair comprising the coils at opposite ends of a respective diameter through the rotational axis of the motor. In this case therefore the pairs are coils AA', BB' and CC', as marked. The coils of a pair are energised at the same time, with current from a motor control circuit 10 (Figure 5), and in a sense such that one provides a magnetic field towards the rotational axis and one away from the axis. In the Figures the arrows on the coils represent the direction of the current in the coil above the plane of the paper and the dashed arrows represent the magnetic flux. Together the magnetic flux lines produced by the energised coils and their respective poles are arranged generally along the diameter between them and then follow the stator ring (in both circumferential directions) to the other energised coil of the pair.

The rotor modifies the distribution of magnetic field lines in the space between the energised pair of stator poles. Positions of the rotor in which a pair of diametrically opposite poles of the rotor are aligned along the diameter between the energised pair of stator poles are positions of the rotor that have minimum reluctance for the magnetic circuit that comprises the rotor between the aligned rotor poles, the energised stator poles and the stator ring. The example of rotor poles U and U' being aligned between stator poles A and A' is shown in Figure 1B. Such a position is therefore a position of minimum magnetic energy. In a non-aligned position, e.g. as in Figure 1A the magnetic flux still flows along the low reluctance path between the poles of rotor and so the flux is diverted from the diameter between the energised poles of the stator, with the result that it has to cross larger air gaps between the poles of the rotor and stator, increasing the reluctance of the magnetic circuit and the magnetic energy. So if the rotor is not aligned there is a torque on it drawing it towards the aligned position.

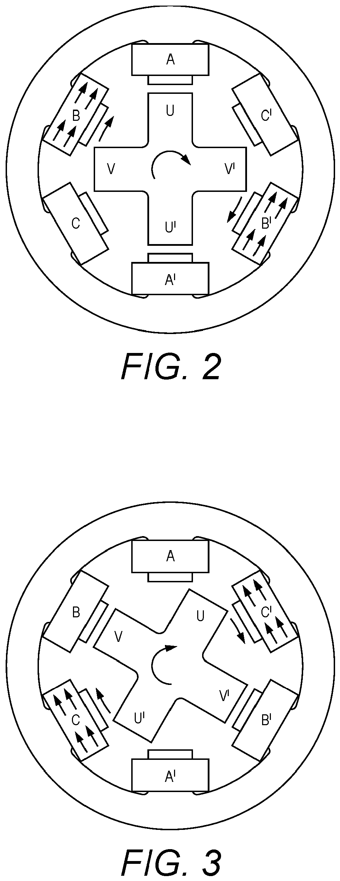

At operational rotation speeds the motor is driven by energising pairs of stator coils in turn to draw the poles of the rotor forward in the direction of rotation. So when, for example, the rotor is in the position of Figure 1A and the rotor is rotating clockwise, so that rotor poles U and U' are approaching stator poles A and A', the coils of A and A' are energised so that U and U' are drawn towards A and A'. When the position of Figure 1B is reached in which U and U' are aligned with coils A and A', A and A' are turned off (Figure 2) so that the rotor can continue to rotate without being slowed or drawn back to A and A'. At this point also rotor poles V and V' are approaching stator poles of coils B and B' so B and B' are energised (Figure 2) to draw stator poles V and V' onwards in the clockwise direction towards B and B'.

When the position of Figure 3 is reached in which V and V' are aligned with coils B and B', B and B' are turned off so that the rotor can continue to rotate without being slowed or drawn back to B and B'. At this point rotor poles U' and U are approaching the stator poles of coils C and C' so coils C and C' are energised to draw rotor poles U' and U onwards in the clockwise direction towards C and C'.

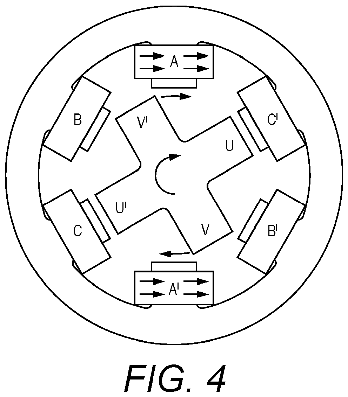

When the position of Figure 4 is reached in which U' and U are aligned with C and C' the coils C and C' are turned off so that the rotor can continue to rotate without being slowed or drawn back to C and C'. At this point rotor poles V' and V are approaching the stator poles of A and A' so the coils A and A' are energised to draw stator poles V' and V onwards in the clockwise direction towards A and A'.

When V' and V reach A and A' the rotor has turned 90°, so, since the rotor has four-fold rotational symmetry it is in effect in the same position as Figure 2 (with poles U' and U re-labelled as V' and V, and *vice versa*) and so the cycle of energising coils B and B' then C and C' and then A and A' is repeated to advance the rotor the next 90°, and so on.

As is known in the art the coils are switched off and on at particular angles of rotation of the rotor, for example in response to sensing signals generated by the coils as they are both driven by the currents and their inductance changes as the rotor poles pass by them. A first motor control circuit 10 is shown in Figure 5. This comprises the stator coil pairs connected in parallel across a DC power supply 20. Coils A and A', connected in parallel with each other, are energised by closing switches 21 and 22, and similarly coils B and B' by switches 23 and 24 and coils C and C' by switches 25 and 26. These switches are operated by the control circuit 10, which closes the switches when the coils are to be energised. Having the coils A and A' operated by a common pair of switches (similarly each coil pair B and B', and C and C', having its own pair of common switches) is sufficient to provide the patterns of coil energisation described above. The switches 21 to 26 are provided, for example, as FET or IGBT transistors. A measure of the current is used by the motor control circuit 10 to determine the position of the rotor and in turn to determine the timings of the operation of the switches 21 to 26.

In more detail, the control circuit 10 of Figure 5 senses signals generated by the coils as they are both driven by their currents and their inductance changes as the rotor poles pass by them. This inductance comprises the stator coil pairs connected in parallel across DC power supply 20. The voltage of this supply depends on the application and might be 12V, 24V, 48V or 300V, for example. Coils A and A', connected in parallel with each other, are energised by closing switches 21 and 22, and similarly coils B and B' by switches 23 and 24, and coils C and C' by switches 25 and 26. These switches are operated by a switch control unit 27, which closes the switches when the coils are to be energised. The current in each coil pair is sensed by a resistor 28 connected in series with it to provide a resulting voltage signal that is proportional to the current, which is used to determine the rotor positions, which are used in turn to determine the timings of the operation of the switches 21 and 22, 23 and 24, and 25 and 26.

The motor control circuit 10 processes the signals from the coils in a number of stages, forming a control loop. A position estimator 30 receives the signals indicative of the coil currents and continuously calculates from them the position of the rotor and outputs a rotor position signal 31. The calculation is performed by a microcontroller. A speed estimator 32 differentiates this signal with respect to time, to provide a rotor speed signal 33. The control loop is designed to control the speed of the motor to be as set by an input signal, speed command signal 35, and the difference between the speed command signal and the rotor speed signal is formed by a subtractor 36 to form a speed error signal 37. A loop controller 38, for example in this case a proportional-integral controller, uses this signal to adjust a torque command 39 for the motor. The relationship between the torque applied by a motor to its steady state speed is generally monotonically increasing. So the controller 38 increases the torque commanded if the speed error indicates that the motor is running slower than required and reduces torque commanded if the motor is running faster than commanded. The controller 38 also filters the signals circulating round the control loop in order to smooth the response of the loop.

The motor 1 is of course not controlled directly by a torque command and the torque command 39 is converted to control angles 42 for the switches of the motor. These angles are the angles of the rotor at which the switches of the motor operated, in particular the angles at which a coil pair is turned on, the angle at which it is allowed to "freewheel", and the angle at which it is turned off.

To turn the pair of coils on both its associated switches are turned on (for coils AA' switches 21 and 22). In the freewheel mode the switch (e.g. 21) connecting the coils to the positive supply is opened but the current continues to circulate through a diode and at the off angle both switches are opened and the current in the coil passes through the other marked diode to ground, dissipating over a short period after the switches are opened. (Alternatively, for the freewheel mode the switch connecting the coils to the negative supply may be opened instead, with the current continuing to flow through the coils of the pair and the other marked diode. Which of the two switches is open in the freewheel mode can be alternated in order share balance the power dissipated by the switches between them.)

The conversion of the torque command signal to these angles is performed by a lookup table 41. The angles needed to provide the torque desired are dependent on the speed of the rotor, so the rotor speed signal 33 is also provided to the lookup table 41, to provide the angles for that torque and speed. These angles are determined empirically while driving the motor while connected to its desired load.

The angles 42 produced by the lookup table 41 are passed to the switch control unit 27, which operates the switches at the angles 42 accordingly when those angles match the rotor position signal 31. In more detail, the angles 42 supplied are the same for each coil pair and are relative to the angular position of the coil pair. The switch controller 27 keeps track of which coil pair is to be operated next and uses the rotor position value 31 modulo 30° for the comparison with the angles 42.

Circuit blocks 30, 32, 36, 38, 41 and 27 are preferably implemented by the microcontroller.

Other forms of control circuit are known. One similar circuit example uses Hall Effect sensors rather than the coil currents to note when the rotor passes various positions.

As is known in the art, other combinations of stator and rotor pole numbers are possible for the motor. These have different cycles of energisation of the coils in order to keep the torque on the rotor in the forward direction. A common relationship between the numbers of poles is to have two more stator poles than rotor poles and to have both even in number. The choice of the number of poles usually takes into account the operating speed of the motor, the operating power, the acceptable level of torque ripple (variation in torque supplied by the motor with angle of the rotor), and the circuitry required.

It is usually generally preferred in such motors for reasons of balance of torque to energise coils in pairs that are diametrically opposite to each other.

An example switched-reluctance motor, for an electric supercharger, according to the invention comprises a stator 1 and a rotor 4 as discussed above in respect of Figs. 1 to 5. As described, the DC power supply 20, in conjunction with switches 21 and 22, 23 and 24, and 25 and 26, provides current in three phases, A, B and C. The supply of current is controlled by the controller 10, with the current in phase A supplied to a first pair of coils AA' on the stator 1, the current in phase B supplied to a second pair of coils BB' on the stator 1, and the current in phase C supplied to a third pair of coils CC' on the stator 1.

Also as described above, for each phase A, B, C, the controller 10 repeatedly (i) starts supply of the current to the pair of coils AA', BB' or CC' supplied by the current of that phase, (ii) stops the supply of current to those coils but allows current already supplied to circulate in those coils and (iii) eliminates the circulating current from those coils. The controller 10 delays the starting, stopping and eliminating steps for the phase C relative to the corresponding steps for phase B, and the starting, stopping and eliminating steps for phase B relative to the corresponding steps for phase A.

However, in embodiments of the invention, the controller 10 is configured differently from the prior-art controllers. In particular, in this example, the controller 10 is configured so that the timing (or, equivalently when the rotor is rotating at a constant speed, the angle through which the rotor 4 has rotated) of the stopping (FW) step for the phases A and C is different to the timing of the stopping step (FW) for the phase B.

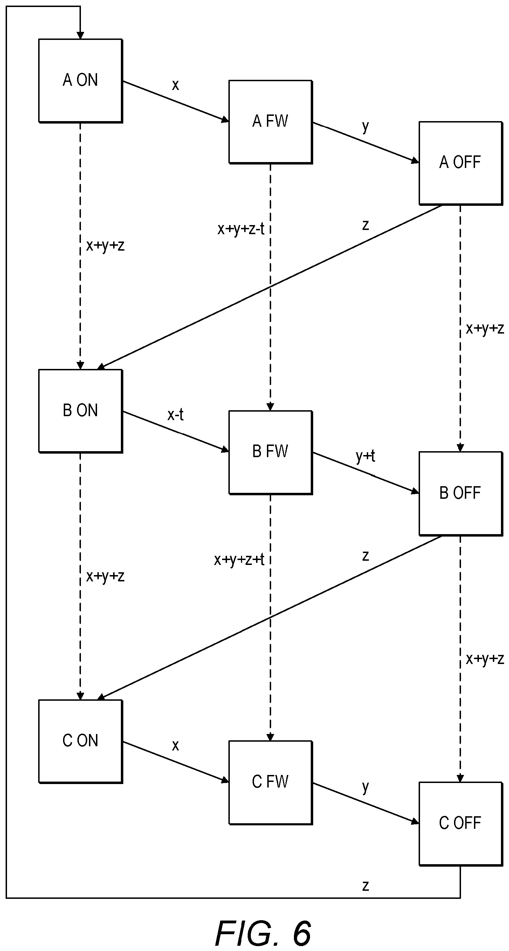

That is explained more fully with reference to Fig. 6, which sets out steps of an example method of the invention. At the start of a cycle, the controller (in particular the switch controller 27), switches on (A ON) the phase A current (i.e. it closes switches 21 and 22 so that current flows into coil pair AA'). After a time x, the controller stops (A FW) the supply of the phase A current (by opening switch 21 whilst switch 22 remains closed); current continues to circulate in the coils AA' and they are in freewheel mode. After a time y, the controller eliminates (A OFF) the circulating current from the coils AA' (by opening switch 22 and thereby allowing the current in the coils AA' to discharge to ground). After a time z, the controller switches on (B ON) the phase B current (i.e. it closes switches 23 and 24 so that current flows into coil pair BB'). After a time (x - t), the controller stops (B FW) the supply of the phase B current (by opening switch 23 whilst switch 24 remains closed); current continues to circulate in the coils BB' and they are in freewheel mode. After a time (y + t), the controller eliminates (B OFF) the circulating current from the coils BB' (by opening switch 24 and thereby allowing the current in the coils BB' to discharge to ground). After a time z, the controller, switches on (C ON) the phase C current (i.e. it closes switches 25 and 26 so that current flows into coil pair CC'). After a time x, the controller stops (C FW) the supply of the phase C current (by opening switch 25 whilst switch 26 remains closed); current continues to circulate in the coils CC' and they are in freewheel mode. After a time y, the controller eliminates (C OFF) the circulating current from the coils CC' (by opening switch 26 and thereby allowing the current in the coils CC' to discharge to ground). After a time z, the cycle begins again, with the controller switching on (A ON) the phase A current.

Thus the timings of corresponding steps (ON, FW, OFF) in each phase A, B, C are the same, with the important exception that the stopping of the phase B current supply (B FW) is earlier by a time t relative to the corresponding stoppings of the phase A and the phase C current supplies (A FW, C FW). Looked at another way, in this example the delay (x + y + z) between the ON steps of phase A and phase B is the same as the delay (x + y + z) between the ON steps of phase B and phase C and it is also the same as the delay (x + y + z) between the OFF steps of phase A and phase B and the delay (x + y + z) between the OFF steps of phase B and phase C. However, the delay (x + y + z - t) between the FW steps of phase A and phase B is less than the delay (x + y + z + t) between the FW steps of phase B and phase c, by a time 2t.

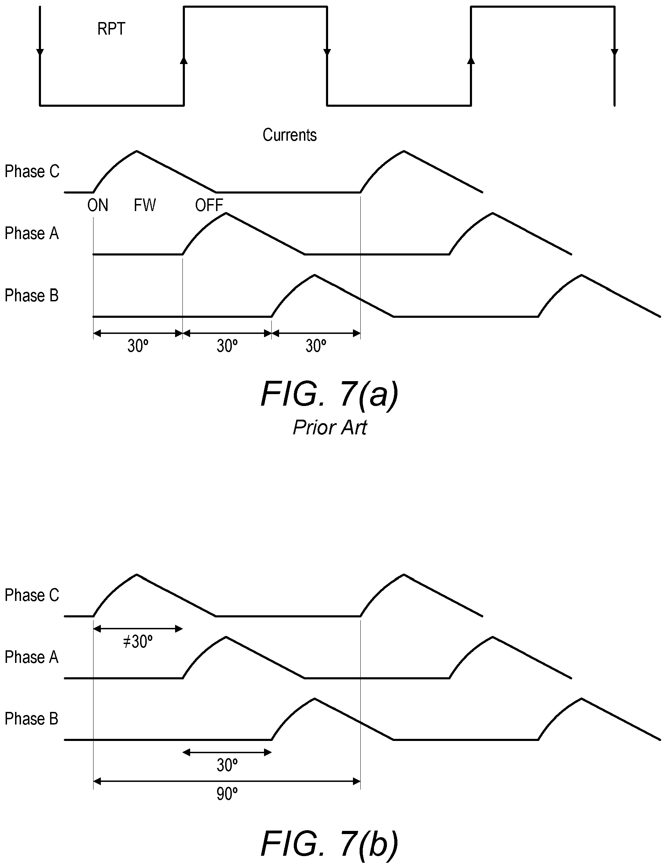

Another example method is shown in Fig. 7, this time in the form of a diagram showing the current phases. In this example, there are again three current phases A, B and C. Fig. 7(a) shows the prior-art arrangement, in which the timings for the steps of each phase are the same (i.e. the steps of each phase are delayed relative to the steps of each other phase by the same amount). Specifically, the rotor rotates 30 degrees between each corresponding step of the three phases A, B, C (e.g. it rotates 30 degrees between the ON step of phase A and the ON step of phase B and another 30 degrees between the ON step of phase B and the ON step of phase C). It will be appreciated that in accordance with usual practice in the art, the values of the timings are relative to each specific phase, i.e. they are all 30 degree in this prior art example).

In the example embodiment of the invention shown in Fig. 7(b), however, the delay between the ON step of phase C and the ON step of phase A is smaller than the delay between the ON step of phase A and the ON step of phase B. The delay between the ON step of phase B and the ON step of phase C is larger than the delay between the ON step of phase A and the ON step of phase B. Put another way, the timing of phase A is less than 30 degrees and the timing of the ON step of phase C is less than 30 degrees.

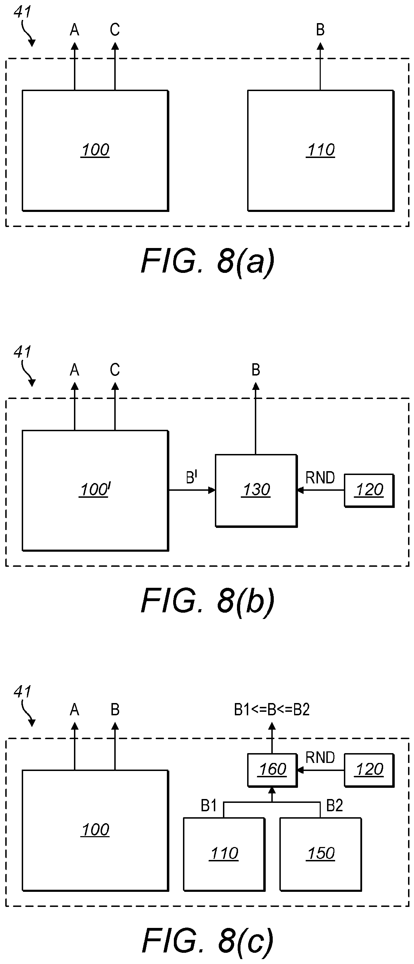

Returning to the example of Fig. 6, the timings for the steps ON, FW, OFF of the phases A, B, C are contained in the look-up table unit (referred to here for convenience by the same reference 41 as the simple look-up table used in the arrangement of Fig. 5). Three alternative example structures for the look-up tables are shown in Fig. 8. Each look up table gives timings (or angles) for each step ON, FW, OFF, as a function of rotor speed and desired torque. In all three examples, the timing of at least one of the phases is obtained from a different source to the timings of the other phase(s).

In a first example structure (Fig. 8(a)), the look-up table unit 41 contains two look-up tables, 100, 110. A first look-up table 100 provides the timings for the ON, FW and OFF steps of phases A and C to the switch controller 27, so the steps of those phases have the same relative delays. However, a second look-up table 110 has different timing values (for the same rotor speed and desired torque) than the values given in the first look-up table 100. The timing values of the second look-up table 110 are calibrated independently of those of the first look-up table 100. The second look-up table 110 provides the timings for the ON, FW and OFF steps of phase B to the switch controller 27, so that phase has different delays relative to the other phases, as described above.

In a second example structure (Fig. 8(b)), according to the invention, the look-up table unit 41 contains only one look-up table 100'. The look-up table 100' contains timings for the ON, FW and OFF steps for all of the phases A, B' and C. However, a random-number generator 120 is also provided. A processor 130 combines a random number RND generated by the random number generator with the timings B' in the table, to provide modified timings B to the switch controller 27. In this example, the timing B FW is to be varied. The value for that timing B' FW is retrieved from the look-up table 100' (the values for the ON and OFF steps of phase B are also retrieved from the look-up table 100', but in this example they are not adjusted by the processor 130). In this example that timing value B' FW corresponds to the rotor rotating 30 degrees between the A FW step and the B FW step. Depending on the random number RND, an angle between -5 degrees and +5 degrees is added to the angle corresponding to B' FW, so that the switch controller 27 stops the supply of current to the BB' coils when the rotor has moved between 25 degrees and 35 degrees from the orientation at which the supply of current to the AA' coils was stopped. In this embodiment, it will be appreciated that although B' is obtained from the first look-up table 100', the FW timing of phase B will nevertheless be understood to be obtained from a different source (there having been a subsequent manipulation of that data).

In this embodiment, the random number generator 120 is biased, so that the random number RND is not zero or near to zero, so that the timing of the B FW step is not the 30 degrees delay of the other steps. (In an alternative embodiment, the random number can be a number that is multiplied with, rather than added to, the timing to be adjusted.)

In a third example structure (Fig. 8(c)) the look-up table unit 41 includes a first look-up table 100, from which the switch controller 27 is provided with timings for phases A and C, and a second look-up table 110, as in the first example structure. However, in this third example structure there is also a third look-up table 150. The second look-up table 110 contains timings B1 for the ON, FW and OFF steps of the phase B current control. The third look-up table 150 also contains timings B2 for the ON, FW and OFF steps of the phase B current, but the timings B2 in the third look-up table 150 differ from the timings B1 in the second look-up table. In this example, the ON and FW angles corresponding to the values in the second look-up table 110 and third look up table 150 are calibrated so that the torque remains the same as with the primary look up table. The second look-up table 110 and third look-up tables 150 are calibrated independently of the first look-up table 100.

The look-up table unit 41 includes a random number generator 120, which generates a random number, in this example between 0 and 100. A processor 160 uses the random number to pick an interpolation point between the timings B1 and the timings B2. For example, if the B1 timing for the B FW step corresponds to a rotor rotation of 28 degrees and the B2 timing for that step corresponds to a rotor rotation of 33 degrees, and the generated random number RND is 75, then the value of B FW used by the switch controller 27 corresponds to 28 + (33-28)*75/100 degrees, i.e. 31.75 degrees (which is of course 75% of the way from 28 to 33).

Three example ways of varying the timing of different phases have been described. With the benefit of the invention, the skilled person will readily identify alternative ways of achieving that variation.

In some example switched-reluctance motors, pulse width modulation is used to slow growth in current when the current is switched ON, for example to prevent the current overshooting its target value. For example, in an example switched-reluctance motor for a supercharger, pulse width modulation (PWM) is used at rotor speeds below 25 krpm.

### Example

A switched-reluctance motor is controlled as follows (the angles are relative to a rotor-stator arrangement in which one of the rotor poles pairs is fully aligned with a stator pole pair):

| | |
|---|---|
| Speed | 50 krpm |
| Torque set point | 0.5 Nm |
| Primary look up table values (degrees) | ON = 33, FW = 62, OFF = 72 |
| Secondary look up table values (degrees) | ON = tbd, FW = tbd, OFF = 69 |
| Tertiary look-up table values (degrees) | ON = tbd, FW = tbd, OFF = 75 |

In this example, we assume that the ON and FW values of the secondary look-up table are calibrated to 33 degrees and 60 degrees, respectively, and that the ON and FW value of the tertiary look-up table are calibrated to 35 degrees and 65 degrees, respectively.

### First cycle

Random number generator = 0.30
Phase A and Phase B timings (degrees) = 33, 62, 72
Phase C OFF timing = 0.30 * (75-69) + 69 = 70.8 degrees
Phase C ON timing = 0.30*(35-33) + 33 = 33.6 degrees
Phase C FW timing = 0.30*(65-60) + 60 = 61.5 degrees

### Second cycle

Random number generator = 0.95
Phase A and Phase B timings (degrees) = 33, 62, 72
Phase C OFF timing = 0.95 * (75-69) + 69 = 74.70 degrees
Phase C ON timing = 0.95*(35-33) + 33 = 34.9 degrees
Phase C FW timing = 0.95*(65-60) + 60 = 64.75 degrees

The process repeats for each successive cycle.

There is therefore every 90 mechanical degrees a random change in the timing of consecutive OFFs for Phase C. The unwanted force waveforms will therefore lose some of their periodic nature. Changing the periodic nature can result in improved vibration performance, and hence quieter running of the motor.

The look-up tables are calibrated with the usual factors in mind, including peak phase current and the sensitivity of torque produced when interpolating all three angles (ON, FW & OFF) by the same factor.

In line with the above discussion, in some example embodiments, the random generator is deliberately biased to avoid interpolating at 50% between the max and min OFF angles (which would likely result in a value close to the primary look-up table and therefore not disruptive from a harmonic point of view). Different number generator profiles could be chosen.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of operating a switched-reluctance motor in an electric supercharger, the method comprising controlling a supply of current in a plurality of phases (A, B) to respective pluralities of coils on a stator or rotor of the motor, including controlling a supply of current in a first phase to a first plurality of coils (AA') on the stator or rotor of the motor, and controlling a supply of current in a second phase to a second plurality of coils (BB') on the stator or rotor;
wherein, for each phase, the control comprises repeatedly (i) starting supply of the current to the plurality of coils supplied by the current of that phase (A, B, C), (ii) stopping the supply of current to those coils but allowing current already supplied to circulate in those coils and (iii) eliminating the circulating current from those coils;
wherein the timings of the starting (ON), stopping (FW) and eliminating (OFF) steps of the first phase (A) are provided from a look-up table (100);
**characterised in that** the method comprises obtaining the timing of at least one of the starting (ON), stopping (FW) and eliminating (OFF) steps in the second phase (B) from the look-up table (100), and combining the timing with a random number (RND) generated by a random number generator (120) to provide a modified timing such that the modified timing of the at least one step is different to the timing of the corresponding step in the first phase(A).

2. A method as claimed in claim 1, in which the random number generator (120) is deliberately biased to avoid selecting a difference that would result in the same timing as the first phase, rather than a different timing.

3. A method as claimed in any preceding claim, in which the timing of the at least one step in the second phase (B) is constrained within upper and lower thresholds.

4. A method as claimed in any preceding claim, in which the magnitude of the difference between the timing of the at least one step in the second phase and the corresponding step in the first phase, varies with time.

5. A method as claimed in any preceding claim, in which the current is supplied in pulses and the pulses of the first and second phases are different from each other.

6. A method as claimed in claim 5, in which each phase is associated with its own look-up table that provides for a phase pulse width or pulse width modulation rate.

7. A method according to any preceding claim, wherein controlling the supply of current in the plurality of phases (A, B) includes controlling a supply of current in a third phase to a third plurality of coils on the stator or rotor of the motor.

8. A method according to claim 7, wherein the timing of said at least one step in the second phase is different to the timing of the corresponding step in the third phase.

9. A method according to claim 7 or claim 8, wherein the timings of the starting, stopping and eliminating steps of the third phase are provided in the first source.

10. An electric supercharger including a switched reluctance motor:
- a stator (1) and a rotor (4);
- a supply providing current in a plurality of phases to respective pluralities of coils on the stator (1) or rotor (4) of the motor;
- a controller (27) for controlling supply of current from the supply
o in a first phase (A) to a first plurality of coils on the stator (1) or rotor (4), and
o in a second phase (B) to a second plurality of coils on the stator (1) or rotor (4), and
- a memory module containing a first look-up table (100) of timings
wherein, for each phase, the controller (27) repeatedly (i) starts supply of the current to the plurality of coils supplied by the current of that phase, (ii) stops the supply of current to those coils but allows current already supplied to circulate in those coils and (iii) eliminates the circulating current from those coils; and wherein the timings of the starting, stopping and eliminating steps of the first phase are provided in the first look-up table (100);
**characterised in that** the controller is arranged to obtain the timing of at least one of the starting, stopping and eliminating steps in the second phase from the look-up table and combine the timing with a random number generated by a random number generator to provide a modified timing, such that the modified timing of the at least one step in the second phase (B) is different to the timing of the corresponding step in the first phase (A).

## Patentansprüche

1. Verfahren zum Betreiben eines geschalteten Reluktanzmotors in einem elektrischen Kompressor, wobei das Verfahren das Steuern einer Stromzufuhr in einer Mehrzahl von Phasen (A, B) zu entsprechenden Mehrzahlen von Spulen an einem Stator oder Rotor des Motors umfasst, das das Steuern einer Stromzufuhr in einer ersten Phase zu einer ersten Mehrzahl von Spulen (AA') an dem Stator oder Rotor des Motors und das Steuern einer Stromzufuhr in einer zweiten Phase zu einer zweiten Mehrzahl von Spulen (BB') an dem Stator oder Rotor umfasst;
wobei die Steuerung für jede Phase wiederholt umfasst: (i) Starten der Stromzufuhr zu der Mehrzahl von Spulen, denen der Strom dieser Phase (A, B, C) zugeführt wird, (ii) Anhalten der Stromzufuhr zu diesen Spulen, jedoch Zulassen, dass bereits zugeführter Strom in diesen Spulen zirkuliert und (iii) Abführen des zirkulierenden Stroms aus diesen Spulen;
wobei die Zeitpunkte des Startschritts (ON), des Anhalteschritts (FW) und des Abführungsschritts (OFF) der ersten Phase (A) aus einer Nachschlagtabelle (100) bereitgestellt werden;
**dadurch gekennzeichnet, dass** das Verfahren das Erhalten der Zeitpunkte des Startschritts (ON) und/oder des Anhalteschritts (FW) und/oder des Abführungsschritts (OFF) in der zweiten Phase (B) aus der Nachschlagtabelle (100) und das Kombinieren des Zeitpunkts mit einer Zufallszahl (RND) umfasst, die durch einen Zufallszahlengenerator (120) erzeugt wurde, um einen geänderten Zeitpunkt bereitzustellen, derart, dass der geänderte Zeitpunkt des mindestens einen Schritts von dem Zeitpunkt des entsprechenden Schritts in der ersten Phase (A) verschieden ist.

2. Verfahren nach Anspruch 1, wobei der Zufallszahlengenerator (120) gezielt beeinflusst wird, um das Auswählen einer Differenz zu vermeiden, die in demselben Zeitpunkt wie die erste Phase, statt in einem verschiedenen Zeitpunkt, resultieren würde.

3. Verfahren nach einem vorhergehenden Anspruch, wobei der Zeitpunkt des mindestens einen Schritts in der zweiten Phase (B) zwischen oberen und unteren Schwellenwerten eingeschränkt ist.

4. Verfahren nach einem vorhergehenden Anspruch, wobei der Betrag der Differenz zwischen den Zeitpunkten des mindestens einen Schritts in der zweiten Phase und des entsprechenden Schritts in der ersten Phase sich mit der Zeit verändert.

5. Verfahren nach einem vorhergehenden Anspruch, wobei der Strom in Impulsen zugeführt wird und die Impulse der ersten und der zweiten Phase voneinander verschieden sind.

6. Verfahren nach Anspruch 5, wobei jeder Phase ihre eigene Nachschlagtabelle zugeordnet ist, die eine Phasenimpulsbreite oder eine Impulsbreitenmodulationsrate bereitstellt.

7. Verfahren nach einem vorhergehenden Anspruch, wobei das Steuern der Stromzufuhr in der Mehrzahl von Phasen (A, B) das Steuern einer Stromzufuhr in einer dritten Phase zu einer dritten Mehrzahl von Spulen an dem Stator oder Rotor des Motors umfasst.

8. Verfahren nach Anspruch 7, wobei der Zeitpunkt des mindestens einen Schritts in der zweiten Phase von dem Zeitpunkt des entsprechenden Schritts in der dritten Phase verschieden ist.

9. Verfahren nach Anspruch 7 oder 8, wobei die Zeitpunkte des Startschritts, des Anhalteschritts und des Abführungsschritts der dritten Phase in der ersten Quelle bereitgestellt werden.

10. Elektrischer Kompressor, der einen geschalteten Reluktanzmotor enthält:
- einen Stator (1) und einen Rotor (4);
- eine Versorgung, die Strom in einer Mehrzahl von Phasen zu entsprechenden Mehrzahlen von Spulen an dem Stator (1) oder dem Rotor (4) des Motors bereitstellt;
- eine Steuereinheit (27) zum Steuern der Stromzufuhr von der Versorgung
o in einer ersten Phase (A) zu einer ersten Mehrzahl von Spulen an dem Stator (1) oder Rotor (4) und
o in einer zweiten Phase (B) zu einer zweiten Mehrzahl von Spulen an dem Stator (1) oder Rotor (4) und
- ein Speichermodul, das eine erste Nachschlagtabelle (100) von Zeitpunkten enthält,
wobei die Steuereinheit (27) für jede Phase wiederholt (i) die Stromzufuhr zu der Mehrzahl von Spulen, denen der Strom dieser Phase zugeführt wird, startet, (ii) die Stromzufuhr zu diesen Spulen anhält, jedoch zulässt, dass bereits zugeführter Strom in diesen Spulen zirkuliert und (iii) den zirkulierenden Strom aus diesen Spulen abführt; wobei die Zeitpunkte des Startschritts, des Anhalteschritts und des Abführungsschritts der ersten Phase aus einer Nachschlagtabelle (100) bereitgestellt werden;
**dadurch gekennzeichnet, dass** die Steuereinheit ausgelegt ist, die Zeitpunkte des Startschritts und/oder des Anhalteschritts und/oder des Abführungsschritts in der zweiten Phase aus der Nachschlagtabelle zu erhalten und den Zeitpunkt mit einer Zufallszahl, die durch einen Zufallszahlengenerator erzeugt wurde, zu kombinieren, um einen geänderten Zeitpunkt bereitzustellen, derart, dass der geänderte Zeitpunkt des mindestens einen Schritts in der zweiten Phase (B) von dem Zeitpunkt des entsprechenden Schritts in der ersten Phase (A) verschieden ist.

## Revendications

1. Procédé destiné à actionner un moteur à réluctance commutée dans un compresseur de suralimentation électrique, le procédé comprenant une étape consistant à commander la fourniture d'un courant dans une pluralité de phases (A, B), à des pluralités respectives de bobines sur un stator ou sur un rotor du moteur, y compris à commander la fourniture d'un courant dans une première phase, à une première pluralité de bobines (AA') sur le stator ou sur le rotor du moteur, et à commander la fourniture d'un courant dans une deuxième phase à une deuxième pluralité de bobines (BB') sur le stator ou sur le rotor ;
dans lequel, pour chaque phase, la commande comprend les étapes consistant, à plusieurs reprises à : (i) démarrer la fourniture du courant à la pluralité de bobines fourni par le courant de cette phase (A, B, C) ; (ii) arrêter la fourniture du courant à ces bobines mais permettre au courant déjà fourni, de circuler dans ces bobines ; et (iii) éliminer le courant qui circule en provenance de ces bobines ;
dans lequel les synchronisations des étapes de démarrage (ON), d'arrêt (FW) et d'élimination (OFF) de la première phase (A), sont fournies à partir d'une table de consultation (100) ;
**caractérisé en ce que** le procédé comprend les étapes consistant à : obtenir la synchronisation de l'une au moins des étapes consistant à démarrer (ON), à arrêter (FW) et à éliminer (OFF) dans la deuxième phase (B), à partir de la table de consultation (100) ; et à combiner la synchronisation avec un nombre aléatoire (RND) généré par un générateur de nombres aléatoires (120), de façon à fournir une synchronisation modifiée de telle sorte que la synchronisation modifiée de l'une ou des étapes, soit différente de la synchronisation de l'étape correspondante dans la première phase (A).

2. Procédé selon la revendication 1, dans lequel le générateur de nombres aléatoires (120) est sollicité de manière délibérée de façon à éviter la sélection d'une différence qui aurait comme conséquence la même synchronisation que celle de la première phase, plutôt qu'une synchronisation différente.

3. Procédé selon l'une quelconque des revendications précédentes, dans lequel la synchronisation de l'une ou des étapes dans la deuxième phase (B), est limitée par des seuils supérieur et inférieur.

4. Procédé selon l'une quelconque des revendications précédentes, dans lequel la grandeur de la différence entre la synchronisation de l'une ou des étapes dans la deuxième phase, et celle de l'étape correspondante dans la première phase, varie avec le temps.

5. Procédé selon l'une quelconque des revendications précédentes, dans lequel le courant est fourni sous la forme d'impulsions, et les impulsions des premières et deuxièmes phases, sont différentes les unes des autres.

6. Procédé selon la revendication 5, dans lequel chaque phase est associée à sa propre table de consultation qui fournit pour une phase, une largeur d'impulsion ou une vitesse de modulation de largeur d'impulsion.

7. Procédé selon l'une quelconque des revendications précédentes, dans lequel l'étape consistant à commander la fourniture d'un courant dans la pluralité de phases (A, B), comprend une étape consistant à commander la fourniture d'un courant dans une troisième phase, à une troisième pluralité de bobines sur le stator ou sur le rotor du moteur.

8. Procédé selon la revendication 7, dans lequel la synchronisation de ladite ou desdites étapes dans la deuxième phase, est différente de la synchronisation de l'étape correspondante dans la troisième phase.

9. Procédé selon la revendication 7 ou la revendication 8, dans lequel les synchronisations des étapes de démarrage, d'arrêt et d'élimination de la troisième phase, sont fournies dans la première source.

10. Compresseur de suralimentation comprenant un moteur à réluctance commutée :
- un stator (1) et un rotor (4) ;
- une alimentation qui fournit un courant dans une pluralité de phases, à des pluralités respectives de bobines sur le stator (1) ou sur le rotor (4) du moteur ;
- un contrôleur (27) destiné à commander la fourniture d'un courant en provenance de l'alimentation ;
- dans une première phase (A), à une première pluralité de bobines sur le stator (1) ou sur le rotor (4) ; et
- dans une deuxième phase (B), à une deuxième pluralité de bobines sur le stator (1) ou sur le rotor (4) ; et
- un module mémoire qui contient une première table de consultation (100) des synchronisations ;
dans lequel, pour chaque phase, le contrôleur (27), à plusieurs reprises : (i) démarre la fourniture du courant à la pluralité de bobines fourni par le courant de cette phase ; (ii) arrête la fourniture du courant à ces bobines mais permet au courant déjà fourni, de circuler dans ces bobines ; et (iii) élimine le courant qui circule en provenance de ces bobines ; et dans lequel les synchronisations des étapes de démarrage, d'arrêt et d'élimination de la première phase, sont fournies dans la première table de consultation (100) ;
**caractérisé en ce que** le contrôleur est agencé de façon à : obtenir la synchronisation de l'une au moins des étapes consistant à démarrer, à arrêter et à éliminer dans la deuxième phase, à partir de la table de consultation ; et à combiner la synchronisation avec un nombre aléatoire généré par un générateur de nombres aléatoires de façon à fournir une synchronisation modifiée, de telle sorte que la synchronisation modifiée de la ou des étapes dans la deuxième phase (B), soit différente de la synchronisation de l'étape correspondante dans la première phase (A).
